# EUROPÄISCHE PATENTSCHRIFT

(11) **EP 2 957 917 B1**
(45) Veröffentlichungstag und Bekanntmachung des Hinweises auf die Patenterteilung: **14.04.2021**
(21) Anmeldenummer: 15172457.2
(22) Anmeldetag: 17.06.2015
(51) Int. Cl.: G01N 35/10

(54) **PIPETTIERVORRICHTUNG MIT GEHÄUSE**
PIPETTING DEVICE WITH HOUSING
DISPOSITIF DE PIPETAGE DOTE D'UN BOITIER

(30) Priorität: 20.06.2014 DE 102014108689
(43) Veröffentlichungstag der Anmeldung: 23.12.2015
(73) Patentinhaber: Hamilton Bonaduz AG, 7402 Bonaduz (CH)
(72) Erfinder: Menzi, Reto, 8757 Filzbach (CH)
(74) Vertreter: Müller Hoffmann & Partner

(56) Entgegenhaltungen:
- EP-A2- 0 895 088
- US-A- 5 627 522
- US-A1- 2009 117 004
- US-A1- 2012 100 047
- G. ALEXANDER GROSS ET AL: "Robotic alliance of miniaturized synthesis and screening: A case study for the identification of histone deacetylase inhibitors", ENGINEERING IN LIFE SCIENCES, Bd. 13, Nr. 4, 28. Juli 2013 (2013-07-28), Seiten 344-351, XP055217323, ISSN: 1618-0240, DOI: 10.1002/elsc.201200090

## Beschreibung

Die Erfindung betrifft eine Pipettiervorrichtung mit Gehäuse, insbesondere einen in einem Gehäuse bzw. einer Verschalung aufgenommenen Pipettieroboter.

Pipettiervorrichtungen zur automatisierten Analyse von biologischen bzw. medizinischen Proben sind üblicherweise in einem Gehäuse untergebracht, um einen beim Verarbeiten von Probenflüssigkeit weitgehend geschlossenen Arbeitsraum bereitstellen zu können. Das Gehäuse dient insbesondere dazu, dem Verdunsten von Probenflüssigkeit entgegenzuwirken durch Reduzierung von Luftströmungen im Arbeitsraum. Ferner dienen die Gehäuse auch dem Schutz von Bedienpersonen während des automatischen Verarbeitens von Proben, wenn die wenigstens eine Pipettiereinheit mit hoher Geschwindigkeit innerhalb des Arbeitsraumes hin und her bewegt wird. Schließlich können durch das Gehäuse auch Verunreinigungen der Pipettiervorrichtung gemindert bzw. verhindert werden.

Bei bisher bekannten Pipettiervorrichtungen ist das Gehäuse in der Regel so gestaltet, dass es fest mit einer Tragstruktur (Rahmenkonstruktion) der Pipettiervorrichtung verbunden ist. Üblicherweise wird das Gehäuse dadurch gebildet, dass an einer die Stabilität der Pipettiervorrichtung gewährleistenden Tragkonstruktion entsprechende Verschalungselemente, etwa in Form von wenigstens teilweise transparenten Klappen oder Platten befestigt sind. Beispiele solcher Pipettiervorrichtungen mit Gehäuse können beispielsweise in der Broschüre der Anmelderin zu ihren STARLINE Produkten gefunden werden, die im Internet zum Zeitpunkt der Einreichung dieser Anmeldung unter folgendem Link verfügbar war: http://www.hamiltonrobotics.com/fileadmin/user_upload/products/startour/MR -0805-03_STAR_LINE_web.pdf

Die Dokumente US 2012/100047 A1, US 2009/117004 A1 und EP 0 895 088 A2 zeigen solche Analysegeräte mit Pipettiervorrichtungen welche in Gehäusen untergebracht sind.

Solche Gehäuse, die auch Teil der tragenden Struktur für die Pipettiervorrichtung sind, weisen den Nachteil auf, dass der Zugang zur Pipettiervorrichtung erschwert sein kann und dass die Montage einer solchen Pipettiervorrichtung samt Gehäuse sehr aufwändig ist.

Aufgabe der Erfindung ist es, eine Pipettiervorrichtung mit Gehäuse bereitzustellen, bei der die erwähnten Nachteile gemindert oder verhindert werden können.

Diese Aufgabe wird durch eine Pipettiervorrichtung mit Gehäuse gemäß den unabhängigen Ansprüchen gelöst. Bevorzugte weitere Merkmale der Pipettiervorrichtung mit Gehäuse sind in den abhängigen Ansprüchen enthalten.

Eine Pipettiervorrichtung mit Gehäuse umfasst:
einen unteren Gehäuseteil mit einem Gehäuseboden, einer unteren Rückseite,
einer unteren Vorderseite und unteren Seitenwänden, welche die untere Vorderseite und die untere Rückseite miteinander verbinden, wobei der untere Gehäuseteil derart ausgeführt ist, dass er direkt auf einer Aufstellfläche, insbesondere einer Arbeitsfläche eines Tisches oder dergleichen, aufstellbar ist;
einen oberen Gehäuseteil mit einem Gehäusedach, einer oberen Rückseite, einer oberen Vorderseite und oberen Seitenwänden, welche die obere Vorderseite und die obere Rückseite miteinander verbinden;
wobei der Gehäuseboden wenigstens eine Auflagefläche umfasst, auf der eine im Gehäuse aufgenommene Pipettiervorrichtung aufliegt;
wobei der obere Gehäuseteil und der untere Gehäuseteil derart ausgeführt sind, dass der obere Gehäuseteil unabhängig von der im unteren Gehäuseteil aufgenommenen Pipettiervorrichtung auf dem unteren Gehäuseteil angeordnet werden kann oder von diesem abgenommen werden kann.

Das Gehäuse ist mit seinem untern und seinem oberen Gehäuseteil unabhängig von einer Tragstruktur der Pipettievorrichtung ausgeführt. Der obere Gehäuseteil kann in der Art einer Haube auf den unteren Gehäuseteil gesetzt werden oder von diesem abgenommen werden. Das Gehäuse ist grundsätzlich so aufgebaut, dass der obere und der untere Gehäuseteil eine selbsttragende Struktur aufweisen, so dass das Gehäuse auch ohne darin aufgenommene Pipettiervorrichtung in sich stabil ist und somit frei aufstellbar ist. Die Pipettiervorrichtung ist aufgrund der wirkenden Schwerkraft an dem unteren Gehäuseteil gelagert. Verbindungen zur gegenseitigen Stabilisierung von Pipettiervorrichtung und den beiden Gehäuseteilen sind nicht zwingend erforderlich.

Die erreichte Entflechtung der Konstruktionen von Gehäuse und Pipettiervorrichtung ermöglicht die getrennte Herstellung der Pipetiervorrichtung und des Gehäuses und eine einfache Montage, im Wesentlichen durch das Anordnen der Pipettiervorrichtung in dem unteren Gehäuseteil und einem nachfolgenden Aufsetzen des oberen Gehäuseteils auf den unteren Gehäuseteil.

Es ist bevorzugt, dass die unteren Seitenwände Stirnseiten aufweisen, die dem oberen Gehäuseteil zugewandt sind und die wenigstens einen teilweise geneigt verlaufenden unteren Auflageabschnitt umfassen.

Ferner ist es bevorzugt, dass die oberen Seitenwände Stirnseiten aufweisen, die dem unteren Gehäuseteil zugewandt sind und die wenigstens einen teilweise geneigt verlaufenden oberen Auflageabschnitt umfassen.

Wenn an jeder Stirnseite wenigstens zwei geneigte Auflageabschnitte vorgesehen sind, die derart geneigt sind, dass sie sich in einer gedachten Verlängerung entlang der betreffenden unteren oder oberen Seitenwand in einem stumpfen Winkel scheiden, können der obere Gehäuseteil und der untere Gehäuseteil im Bereich ihrer Stirnseiten miteinander in formschlüssige Verbindung gebracht werden. Durch die geneigte Anordnung der Stirnseiten kann ein Bewegen des oberen Gehäuseteils auf dem unteren Gehäuseteil insbesondere entlang einer im Wesentlichen horizontalen und zu den Seitenwänden im Wesentlichen parallelen Richtung verhindert werden.

Um einer Verschiebung des oberen Gehäuseteils auf dem unteren Gehäuseteil weiter entgegenzuwirken, können am oberen Gehäuseteil und am unteren Gehäuseteil Vorsprünge und korrespondierende Ausnehmungen so vorgesehen sind, dass sie miteinander in Eingriff stehen, wenn der obere Gehäuseteil auf dem unteren Gehäuseteil angeordnet ist. Dies kann insbesondere durch Bohrungen in den unteren Seitenwänden bzw. deren Stirnseiten und korrespondierenden Stiften bzw. Zapfen in den oberen Seitenwänden bzw. deren Stirnseiten erreicht werden. Selbstverständlich kann die Anordnung von Ausnehmungen und Vorsprüngen an den oberen bzw. unteren Stirnseiten frei gewählt werden und es ist denkbar, dass an einer Stirnseite sowohl Ausnehmungen als auch Vorsprünge vorgesehen sind.

In den unteren und den oberen Seitenwänden kann jeweils ein Ausschnitt vorgesehen sein, in dem ein die obere und untere Seitenwand verbindendes insbesondere transparentes Seitenwandelement, vorzugsweise ein Fensterelement aus Kunststoff oder Glas, aufnehmbar oder aufgenommen ist. Entlang eines Innenumfangs der Ausschnitte kann zu diesem Zweck eine Nut vorgesehen sein, in welche das Seitenwandelement aufgenommen werden kann bzw. aufgenommen ist.

Es ist bevorzugt, dass der untere Gehäuseteil an seiner Vorderseite wenigstens ein unteres Türelement aufweist, das zwischen einer Öffnungsstellung und einer Verschlussstellung beweglich, insbesondere verschwenkbar ist, wobei vorzugsweise das untere Türelement wenigstens teilweise aus einem transparenten Material hergestellt ist.

Ferner kann der obere Gehäuseteil an seiner Vorderseite wenigstens ein oberes Türelement aufweisen, das zwischen einer Öffnungsstellung und einer Verschlussstellung beweglich, insbesondere verschwenkbar ist, wobei vorzugsweise das obere Türelement wenigstens teilweise aus einem transparenten Material hergestellt ist.

Durch das obere und das untere Türelement kann ein Zugang zur Pipettiervorrichtung bereitgestellt werden, die im Gehäuse aufgenommen ist. Bei geschlossenem oberem Türelement können durch ein geöffnetes unteres Türelement Probenbehälter bzw. sogenannte Racks in die Pipettiervorrichtung eingeführt oder aus dieser entnommen werden. Das obere und das untere Türelement sind vorzugsweise um eine obere bzw. untere Schwenkachse drehbar, derart, dass das obere Türelement beim Öffnen nach oben verschwenkt wird und das untere Türelement beim Öffnen nach unten verschwenkt wird.

Bei geschlossenem unteren und oberen Türelement kann ein durch das Gehäuse gebildeter geschlossener Arbeitsraum gebildet werden, in dem die Pipettiervorrichtung im Betrieb aufgenommen ist.

Im Gehäuseboden können mehrere voneinander getrennte Vertiefungen vorgesehen sein, deren jeweilige Bodenfläche tiefer liegt als die Auflagefläche für die Pipettiervorrichtung.

Dabei ist es bevorzugt, dass die Vertiefungen derart ausgeführt sind, dass in ihnen weitere dem Betrieb der Pipettiervorrichtung dienende Komponenten aufnehmbar sind, wie etwa Stromanschlusseinheit, Rechnereinheit, Lüftungseinheit und dergleichen.

In der oberen oder/und der unteren Rückwand des oberen bzw. unteren Gehäuseteils können gitterartige oder schlitzartige Öffnungen vorgesehen sein.

Vorzugsweise sind der untere Gehäuseteil und der obere Gehäuseteil aus einem Kunststoff hergestellt, vorzugsweise aus Polyurethan oder Polyurethanschaum. Da die beiden Gehäuseteile schalenartig bzw. haubenartige ausgeführt sind, können sie in einem Gussverfahren oder Schäumverfahren in einfacher Weise hergestellt werden. Die Verwendung eines Kunststoffschaums hat dabei den Vorteil, dass eine gut elektrische Isolierung erreicht wird und Gewicht eingesprart werden kann.

Bevorzugt umfasst die im Gehäuse aufgenommene Pipettiervorrichtung:
eine Aufnahmeplatte zur Aufnahme von wenigstens einem Probenbehälter; wenigstens eine Pipettiereinheit mit einem Pipettierkanal zum Aspirieren und Dispensieren von Probenflüssigkeit aus dem wenigstens einen Probenbehälter, wobei der Pipettierkanal in drei zueinander orthogonalen Hauptrichtungen (X, Y, Z) beweglich ist mittels Antriebseinheiten für die Bewegung entlang der Hauptrichtungen (X, Y Z),
wobei eine mit der Aufnahmeplatte verbundene Trägerkonstruktion, an der die Pipettiereinheit gelagert ist und entlang der die Pipettiereinheit in einer der Hauptrichtungen (X) beweglich ist, selbsttragend ausgebildet ist, so dass ein Betrieb der Pipettiervorrichtung unabhängig davon möglich ist, ob die Pipettiervorrichtung in einem Gehäuse aufgenommen ist oder/und verbunden ist.

Nachfolgend wird eine Ausführungsform einer Pipettiervorrichtung mit Gehäuse unter Bezugnahme auf die anliegenden Figuren beispielhaft beschrieben.
- Fig. 1: zeigt in schematischer perspektivischer Explosionsdarstellung eine Ausführungsform eines Gehäuses für eine Pipettiervorrichtung.
- Fig. 2: in schematischer Perspektivdarstellung einen oberen Gehäuseteil und einen unteren Gehäuseteil, die jeweils so dargestellt sind, dass der Blick in das Innere des jeweiligen Gehäuseteils ermöglicht ist.
- Fig. 3: zeigt das Gehäuse der Fig. 1 im zusammengesetzten Zustand mit geschlossenen Türelementen an der Vorderseite.
- Fig. 4: zeigt das Gehäuse der Fig. 3 ohne Türelemente.
- Fig. 5: zeigt die Rückseite des Gehäuses der Fig. 3.
- Fig. 6: zeigt einen Schnitt durch die Seite des Gehäuses der Fig. 3 entsprechend der Schnittlinie VI-VI.
- Fig. 7: zeigt eine Pipettiervorrichtung mit selbsttragender Struktur ohne umgebendes Gehäuse.
- Fig. 8: zeigt die Pipettiervorrichtung der Fig. 7 aufgenommen in einem unteren Gehäuseteils des Gehäuses.
- Fig. 9: zeigt die im zusammengesetzten Gehäuse der Fig. 3 aufgenommene Pipettiervorrichtung bei geöffneten Türelementen des Gehäuses.
- Fig. 10: zeigt einen Schnitt durch das Gehäuse der Fig. 9 in einem mittleren Bereich entsprechend der Schnittlinie X-X der Fig. 9, wobei von der Pipettiervorrichtung aus Gründen der Übersichtlichkeit nur eine Aufnahmeplatte und eine Trägerkonstruktion dargestellt sind und wobei die Türelemente geschlossen sind.

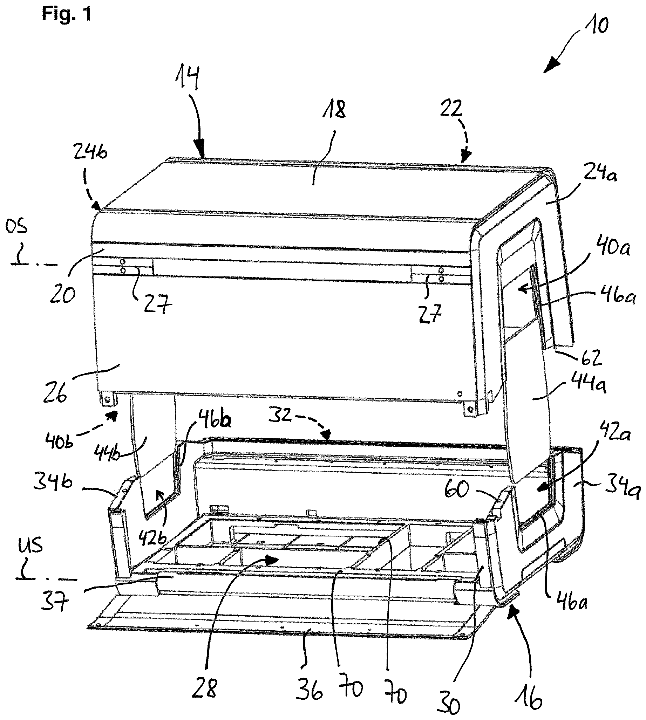

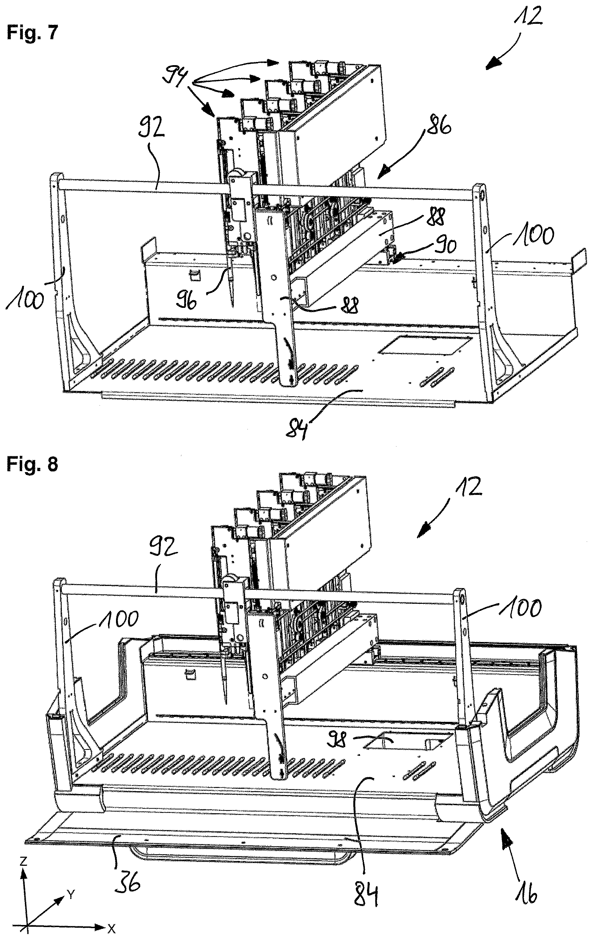

In Fig. 1 ist in einer vereinfachten perspektivischen Explosionsdarstellung ein Gehäuse 10 dargestellt für eine in Fig. 7 ohne Gehäuse dargestellte Pipettiervorrichtung 12. Das Gehäuse 10 umfasst einen oberen Gehäuseteil 14, der auch als obere Verschalung oder obere Halbschale bezeichnet werden kann, und einen unteren Gehäusteil 16, der als untere Verschalung oder untere Halbschale bezeichnet wrden kann. Der Begriff Halbschale ist dabei allerdings nicht dahingehend zu verstehen, dass der obere und der untere Gehäuseteil jeweils genau die Hälfte des von ihnen eingeschlossenen Volumens eines gemeinsam gebildeten Arbeitsraumes umgeben, also jeweils genau gleich dimensioniert sind.

Der obere Gehäuseteil 14 umfasst ein Gehäusedach 18, eine obere Vorderseite 20, eine hier nicht sichtbare obere Rückseite 22 und zwei obere Seitenwände 24a und 24b, welche die obere Vorderseite 20 und die obere Rückseite 22 miteinander verbinden.

Der untere Gehäuseteil 16 umfasst einen Gehäuseboden 28, eine untere Vorderseite 30, eine hier nicht sichtbare untere Rückseite 32 und zwei untere Seitenwände 34a und 34b, welche die untere Vorderseite 30 und die untere Rückseite 32 miteinander verbinden.

Am oberen Gehäuseteil 14, insbesondere an dessen Vorderseite 20 ist ein oberes Türelement 26 angebracht, das mittels Scharnieren 27 um eine obere Schwenkachse OS zwischen einer geschlossenen und einer geöffneten Stellung verschenkbar ist. In der Fig. 1 ist das obere Türelement 26, das auch als obere Klappe bezeichnet werden kann, geschlossen dargestellt, also nach unten geklappt.

Am unteren Gehäuseteil 16, insbesondere an dessen Vorderseite 30 ist ein unteres Türelement 36 angebracht, das durch Scharniermittel 37 um eine untere Schwenkachse US zwischen einer geschlossenen und einer geöffneten Stellung verschwenkbar ist. In der Fig. 1 ist das untere Türelement 36, das auch als untere Klappe bezeichnet werden kann, in seiner geöffneten Stellung dargestellt, also nach unten geklappt.

Der obere Gehäuseteil 14 weist in seinen Seitenwänden 24a und 24b jeweilige Aussparungen bzw. Ausschnitte 40a und 40b auf, wobei in der Fig. 1 nur die Aussparung 40a der rechten Seitenwand 24a sichtbar ist. Ebenso umfasst der untere Gehäuseteil 16 in seinen Seitenwänden 34a und 34b jeweilige Aussparungen bzw. Ausschnitte 42a und 42b. In die jeweiligen Aussparungen (40a, 42a bzw. 40b, 42b) auf einer jeweiligen Seite des Gehäuses 10 kann ein die obere und untere Seitenwand 24a, 34a bzw. 24b, 34b verbindendes insbesondere transparentes Seitenwandelement 44a 44b eingesetzt werden oder sein. Dieses Seitenwandelement 44a, 44b ist dabei bevorzugt als Fensterelement aus Kunststoff oder Glas ausgebildet. Damit das Seitenwandelement 44a, 44b sicher in den Ausspraungen 40a, 42a bzw. 40b, 42b aufgenommen werden kann, kann entlang des Innenumfangs dieser Aussparungen eine Aufnahmenut 46a, 46b vorgesehen sein, welche mit dem Außenumfang des betreffenden Seitenwandelements 44a, 44b in einem zusammengesetzten Zustand des Gehäuses 10 in Eingriff steht.

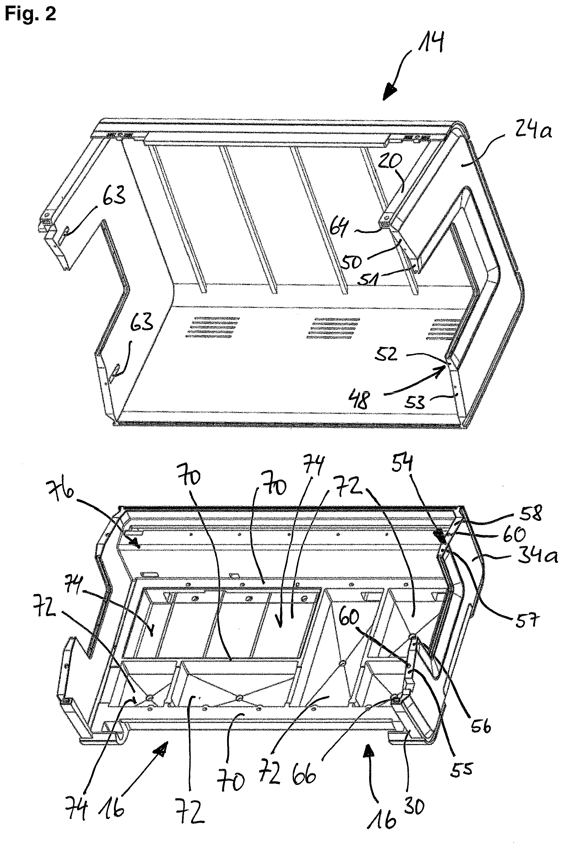

Wie aus der Explosionsdarstellung der Fig. 1 bereits ersichtlich, kann der obere Gehäuseteil 14 auf den unteren Gehäuseteil 16 abgesenkt und auf diesem abgestützt werden. Das Zusammensetzen der beiden Geräteteile 14, 16 wird in den weiteren Figuren 2 bis 6 nachfolgend nur für die in Fig. 1 rechten Seitenwände 24a, 34a beschrieben, gilt aber in gleicher Weise für die linken Seitenwände 24b, 34b.

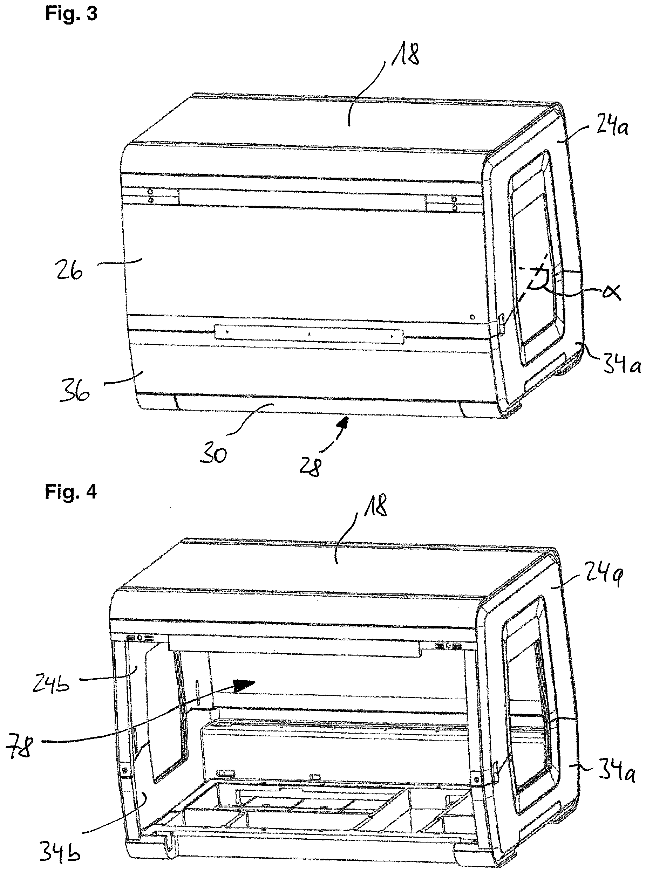

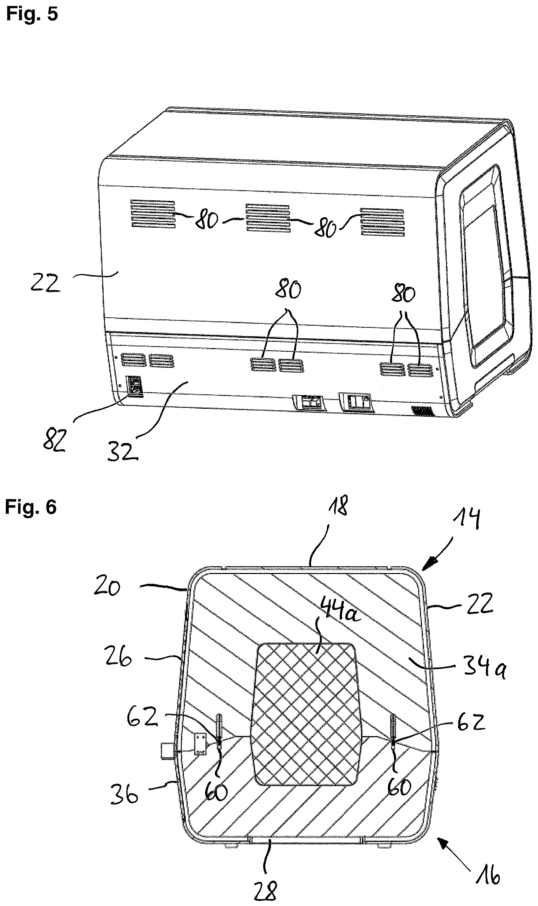

Die obere Seitenwand 24a weist eine dem unteren Gehäuseteil 16, insbesondere der unteren Seitenwand 34a zugewandte Stirnseite 48 auf, die mehrere Auflageabschnitte 50, 51, 52, 53 umfasst (Fig. 2). Bezogen auf eine von dem Gehäusedeckel 18 bzw. Gehäuseboden 28 festgelegten Ebene eines zusammengesetzten Gehäuses 10, wie es in Fig. 3 dargestellt ist und auch in der zugehörigen Schnittdarstellung der rechten Seite in Fig. 6 ersichtlich ist, verlaufen die Auflageabschnitte 50 und 53 geneigt zu den Auflageabschnitten 51 und 52. Verlängert man die geneigten Auflageabschnitte 50, 53 zur Mitte der Seitenwand hin, schneiden sie sich in einem stumpfen Winkel alpha, was beispielhaft in Fig. 3 dargestellt ist. Die Auflageabschnitte 51 und 52 sind im Wesentlichen parallel zur Ebene des Gehäusedeckels 18 bzw. des Gehäusebodens 28 ausgebildet.

Die untere Seitenwand 34a weist korrespondierend eine dem oberen Gehäuseteil 14 zugwandte untere Stirnseite 54 auf, die mehrere Auflageabschnitte 55, 56, 57, 58 umfasst (Fig. 2). Bezogen auf eine von dem Gehäusedeckel bzw. Gehäuseboden festgelegten Ebene eines zusammengesetzten Gehäuses 10, wie es in Fig. 3 dargestellt ist und auch in der zugehörigen Schnittdarstellung der rechten Seite in Fig. 6 ersichtlich ist, verlaufen die Auflageabschnitte 55 und 58 geneigt zu den Auflageabschnitten 56 und 57. Verlängert man die geneigten Auflageabschnitte 55, 58 zur Mitte der Seitenwand hin, schneiden sie sich in einem stumpfen Winkel alpha, was beispielhaft in Fig. 3 dargestellt ist. Die Auflageabschnitte 56 und 57 sind im Wesentlichen parallel zur Ebene des Gehäusedeckels bzw. des Gehäusebodens ausgebildet. Liegt der obere Gehäuseteil 14 mit seinen Auflageabschnitten 50, 51, 52, 53 auf den korrespondierenden Auflageabschnitten 55, 56, 57, 58 des unteren Gehäuseteils 16 auf, ist eine Bewegung des oberen Gehäuseteils entlag der Ebene der Seitenwände (Y-Z-Ebene) eingeschränkt bzw. verhindert. Der obere Gehäuseteil 14 ist somit an den beiden Seiten des Gehäuses 10 formschlüssig mit dem unteren Gehäuseteil 16 verbunden.

Um den oberen Gehäuseteil 14 zusätzlich zu sichern, sind in der unteren Stirnseite 54 beispielhaft zwei Bohrungen 60 vorgesehen, die mit korrespondierenden stift- oder zapfenartigen Verbindungselementen 62 in Eingriff gebracht werden können bzw. in Eingriff stehen, wobei diese Verbindungselemente 62 auch mit dem oberen Gehäuseteil 14 verbunden sind (Fig. 6).

Im Bereich dieser Verbindungselemente 62 weist der obere Gehäuseteil 14 auf der Innenseite der Seitenwände 24a, 24b Öffnungen 63 auf, die insbesondere in Fig. 2 erkennbar sind, so dass als Verbindungselement 62 auch eine Art Verschraubung, etwa Spannschraube oder ähnliches denkbar ist, bei der ein Zugang zum Festziehen/Lösen über die Öffnung 63 ermöglicht ist.

An einer Stirnseite der Vorderseite 20 des oberen Gehäuseteils 14 ist eine Aussparung 64 ersichtlich (Fig. 2), in die ein korrespondierender Dorn 66 eingeführt werden kann, der am unteren Gehäuseteil 16 an dessen Vorderseite 30 vorgesehen ist.

Insgesamt können also am oberen Gehäuseteil 14 und am unteren Gehäuseteil 16 mehrere korrespondierende Ausnehmungen und Vorsprünge vorgesehen sein, die eine formschlüssige Verbindung zwischen den beiden Gehäuseteilen 14, 16 ermöglichen und ein sicheres, insbesondere nicht verschiebbares Aufliegen des oberen Gehäuseteils 14 auf dem unteren Gehäuseteil 16 gewährleisten.

Wie aus den Darstellungen der Fig. 1 und 2 ersichtlich, sind im Gehäuseboden mehrere Auflageflächen 70 vorgesehen, auf denen eine im unteren Gehäuseteil 16 aufgenommene Pipettiervorrichtung 12 abgestützt werden kann. Ferner sind im Gehäuseboden mehrere voneinander getrennte Vertiefungen 72 vorgesehen, deren jeweilige Bodenfläche 74 tiefer liegt als die Auflageflächen 70 für die Pipettiervorrichtung 12.

Der Gehäuseboden 28 weist in einem hinteren Bereich, der sich an die untere Rückseite 32 anschließt einen stufenartigen geformten Stützbereich 76 auf. Dieser Stützbereich dient ebenfalls der Abstützung der Pipettiervorrichtung 12, was nachfolgend noch genauer beschrieben wird.

Die Fig. 3 und 4 zeigen eine zusammengesetztes Gehäuse 10, wobei in Fig. 3 die Türelemente 26 bzw. 36 angebracht sind und in ihrer geschlossenen Stellung dargestellt sind. In Fig. 4 sind die Türelemente 26, 36 weggelassen, so dass der Blick frei ist in ein vom Gehäuse 10, insbesondere von den beiden Gehäuseteilen 14, 16 umschlossenes Volumen, das als Arbeitsraum 78 bezeichnet werden kann.

Die Fig. 5 zeigt die obere und die untere Rückseite 22, 32 des Gehäuses 10. In der oberen Rückseite 22 und in der unteren Rückseite 32 sind schlitzartige Öffnungen 80 angeordnet, die zur Belüftung dienen, insbesondere auch dem Abführen von Abwärme. Bei 82 ist ein Stromanschluss für die Pipettiereinrichtung ersichtlich.

In diesem Zusammenhang wird noch darauf hingewiesen, dass in den Vertiefungen 72 (Fig. 1 und 2) des Gehäusebodens 28 dem Betrieb der Pipettiervorrichtung dienende Komponenten aufnehmbar sind, wie etwa Stromanschlusseinheit, Rechnereinheit, Lüftungseinheit und dergleichen.

Eine in dem Gehäuse der Fig. 1 bis 6 aufnehmbare Pipettiervorrichtung 12 ist in vereinfachter schematischer Darstellung in Fig. 7 dargestellt. Die Pipettiervorrichtung umfasst eine Aufnahmeplatte 84 zur Aufnahme von wenigstens einem (nicht dargestellten) Probenbehälter. Die Pipettiervorrichtung umfasst ferner eine Positioniervorrichtung 86, die einen in einer ersten Hauptrichtung (X) beweglichen Hauptrahmen 88 umfasst. Der Hauptrahmen 88 ist in einem hinteren Teil der Aufnahmeplatte 84 auf einer schienenartigen Konstruktion 90 gelagert, die hier nicht im Detail dargestellt ist. In einem vorderen Bereich der Aufnahmeplatte 84 ist der Hauptrahmen 88 an einem stangenartigen Träger 92 rollend abgestützt. Für den Hauptrahmen 88 ist eine nicht näher dargestellte Antriebseinrichtung vorgesehen, welche die Bewegung entlang der schienenartigen Konstruktion 90 und dem Träger 92 ermöglicht. Die Konstruktion der Pipettiervorrichtung 12 ist somit selbsttragend ausgeführt, so dass ein Betrieb der Pipettiervorrichtung unabhängig davon möglich ist, ob die Pipettiervorrichtung in dem Gehäuse 10 aufgenommen ist oder/und verbunden ist.

An der Positioniervorrichtung 86 sind mehrere Pipettiereinheiten 94 mit einem jeweiligen Pipettierkanal 96 zum Aspirieren und Dispensieren von Probenflüssigkeit aus Probenbehältern angebracht, wobei jeder Pipettierkanal 96 in die drei zueinander orthogonalen Hauptrichtungen (X, Y, Z) beweglich ist mittels hier nicht im Detail beschriebener Antriebseinheiten für die Bewegung entlang der Hauptrichtungen (X, Y Z).

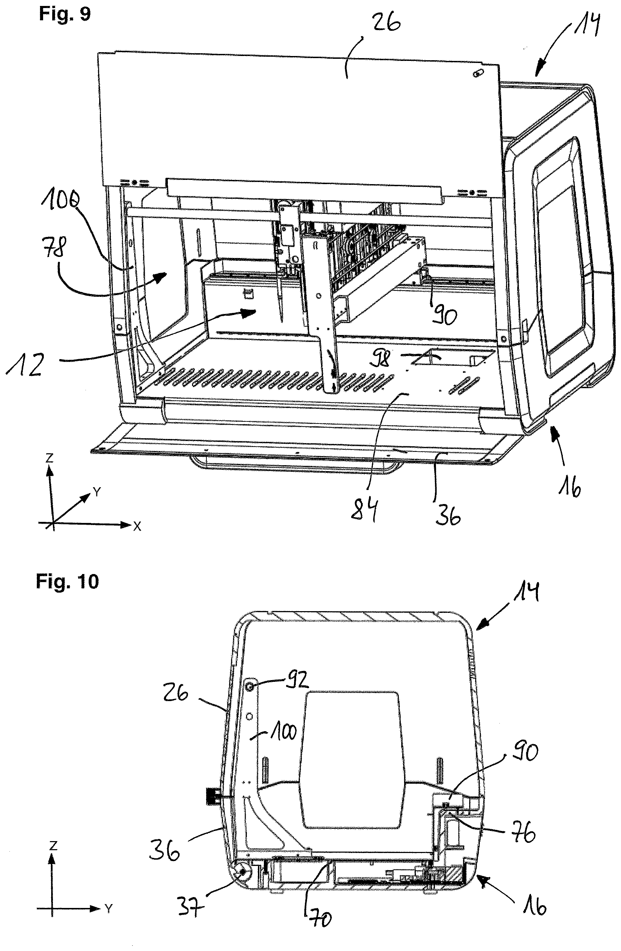

Fig. 8 zeigt den unteren Gehäuseteil 16 mit darin aufgenommener bzw. abgestützter Pipettiervorrichtung 12. In Fig. 9 ist der obere Gehäuseteil 14 auf dem unteren Gehäuseteil 16 aufgesetzt, so dass die Pipettiervorrichtung 12 im Arbeitsraum 78 aufgenommen ist. Die beiden Türelemente 26, 36 sind in ihrer jeweils geöffneten Stellung dargestellt. Während der Durchführung von Probenanalysen können diese Türelemente 26, 36 geschlossen werden. Es ist auch möglich, nur das untere Türelement 36 zu öffen bei geschlossenem oberen Türelement 26, so dass der Zugang zur Aufnahmeplatte 84 freigegeben ist, um etwa Probenbehäter einzuführen oder zu entnehmen.

In der Aufnahmeplatte 84 ist auch eine Ausnehmung 98 enthalten, in die beispielsweise eine externe Apparatur, wie etwa ein Thermocycler oder ähnliches aufgenommen werden kann.

Aus der Schnittdarstellung der Fig. 10 ist ersichtlich, dass die Pipettiervorrichtung 12 lediglich auf dem unteren Gehäuseteil 16 abgestützt ist, insbesondere mit ihrer Aufnahmeplatte auf den Aufnahmeflächen 70, aber auch mit ihrer Schienenartigen Konstruktion 90 auf dem Stützbereich 76. Der stangenartige Träger 92 und seine beiden Trägerstützen 100 sind innerhalb des Arbeitsraumes 78 frei aufgenommen und nicht mit dem Gehäuse, insbesondere dem oberen Gehäuseteil 14 verbunden. Der obere Gehäuseteil 14 kann daher unabhängig von der Pipettiervorrichtung 12 auf den unteren Gehäuseteil 16 aufgesetzt oder von diesem abgenommen werden.

Das Gehäuse 10, insbesondere dessen beiden Gehäuseteile 14, 16 sind vorzugsweise aus einem Kunststoff, insbesondere einem geschäumten Kunststoff hergestellt. Besonders bevorzugt ist die Herstellung des Gehäuses 10 aus einem Polyurethanschaum. Die Türelemente 26, 36 und die Seitenwandelemente 44a, 44b (Fig.l) sind können ebenfalls aus einem Kunststoff hergestellt, der vorzugsweise transparent ist.

Wie sich aus der vorhergehenden Beschreibung einer Pipettiervorrichtung 12 mit Gehäuse 10 erkennen lässt, können das Gehäuse 10 und die Pipettiervorrichtung 12 unabhängig voneinander hergestellt werden, da insbesondere auf bisher übliche konstruktive Verbindungen zwischen der Tragkonstruktion für die Pipettiervorrichtung und und dem Gehäuse verzichtet wird. In gewisser Weise kann davon gesprochen werden, dass eine Pipettiervorrichtung als Pipettiermodul in ein modularen Gehäuse aufgenommen werden kann. Durch den im Wesentlichen zweiteiligen Aufbau des Gehäuses 10 mit oberem und unterem Gehäuseteil 14, 16 können auch Wartungsarbeiten einfacher durchgeführt werden und es ist ebenfalls möglich eine Pipettiervorrichtung insgesamt auszutauschen, ohne dass auch das Gehäuse oder Gehäusekomponenten getauscht werden müssen.

## Patentansprüche

1. Pipettiervorrichtung mit Gehäuse (10), insbesondere Pipettieroboter, umfassend:
einen unteren Gehäuseteil (16) mit einem Gehäuseboden (28), einer unteren Rückseite (32), einer unteren Vorderseite (30) und unteren Seitenwänden (34a, 34b), welche die untere Vorderseite (30) und die untere Rückseite (32) miteinander verbinden, wobei der untere Gehäuseteil (16) derart ausgeführt ist, dass er direkt auf einer Aufstellfläche, insbesondere einer Arbeitsfläche eines Tisches oder dergleichen, aufstellbar ist;
einen oberen Gehäuseteil (14) mit einem Gehäusedach (18), einer oberen Rückseite (22), einer oberen Vorderseite (20) und oberen Seitenwänden (24a, 24b), welche die obere Vorderseite (20) und die obere Rückseite (22) miteinander verbinden;
wobei der Gehäuseboden (28) wenigstens eine Auflagefläche (70) umfasst, auf der eine im Gehäuse aufgenommene Pipettiervorrichtung (12) aufliegt;
wobei der obere Gehäuseteil (14) und der untere Gehäuseteil (16) derart ausgeführt sind, dass der obere Gehäuseteil (14) unabhängig von der im unteren Gehäuseteil (16) aufgenommenen Pipettiervorrichtung (12) auf dem unteren Gehäuseteil (16) angeordnet werden kann oder von diesem abgenommen werden kann.

2. Pipettiervorrichtung nach Anspruch 1, wobei die unteren Seitenwände (34a, 34b) Stirnseiten (54) aufweisen, die dem oberen Gehäuseteil (14) zugewandt sind und die wenigstens einen teilweise geneigt verlaufenden unteren Auflageabschnitt (55, 56, 57, 58) umfassen.

3. Pipettiervorrichtung nach Anspruch 1 oder 2, wobei die oberen Seitenwände (24a, 24b) Stirnseiten (48) aufweisen, die dem unteren Gehäuseteil (16) zugewandt sind und die wenigstens einen teilweise geneigt verlaufenden oberen Auflageabschnitt 50, 51, 52, 53) umfassen.

4. Pipettiervorrichtung nach Anspruch 2 und 3, wobei an jeder Stirnseite (48, 54) wenigstens zwei geneigte Auflageabschnitte (50, 53, 55, 58) vorgesehen, die derart geneigt sind, dass sie sich in einer gedachten Verlängerung entlang der betreffenden unteren oder oberen Seitenwand (24a, 24, b, 34a, 34b) in einem stumpfen Winkel scheiden.

5. Pipettiervorrichtung nach einem der vorhergehenden Ansprüche, wobei am oberen Gehäuseteil (14) und am unteren Gehäuseteil (16) Vorsprünge (62, 66) und korrespondierende Ausnehmungen (60, 64) so vorgesehen sind, dass sie miteinander in Eingriff stehen, wenn der obere Gehäuseteil (14) auf dem unteren Gehäuseteil (16) angeordnet ist.

6. Pipettiervorrichtung nach einem der vorhergehenden Ansprüche, wobei in den unteren und den oberen Seitenwänden (24a, 24b, 34a, 34b) jeweils ein Ausschnitt (40a, 40b, 42a, 42b) vorgesehen ist, in dem ein die obere und untere Seitenwand (24a, 34a, 24b, 34b) verbindendes insbesondere transparentes Seitenwandelement (44a, 44b), vorzugsweise ein Fensterelement aus Kunststoff oder Glas, aufnehmbar oder aufgenommen ist.

7. Pipettiervorrichtung nach einem der vorhergehenden Ansprüche, wobei der untere Gehäuseteil (16) an seiner Vorderseite (30) wenigstens ein unteres Türelement (36) aufweist, das zwischen einer Öffnungsstellung und einer Verschlussstellung beweglich, insbesondere verschwenkbar ist, wobei vorzugsweise das untere Türelement (36) wenigstens teilweise aus einem transparenten Material hergestellt ist.

8. Pipettiervorrichtung nach einem der vorhergehenden Ansprüche, wobei der obere Gehäuseteil (14) an seiner Vorderseite (20) wenigstens ein oberes Türelement (26) aufweist, das zwischen einer Öffnungsstellung und einer Verschlussstellung beweglich, insbesondere verschwenkbar ist, wobei vorzugsweise das obere Türelement (26) wenigstens teilweise aus einem transparenten Material hergestellt ist.

9. Pipettiervorrichtung nach Anspruch 7 und 8, wobei bei geschlossenem unteren und oberen Türelement (26, 36) ein durch das Gehäuse (10) gebildeter geschlossener Arbeitsraum (78) gebildet ist, in dem die Pipettiervorrichtung (12) im Betrieb aufgenommen ist.

10. Pipettiervorrichtung nach einem der vorhergehenden Ansprüche, wobei im Gehäuseboden (28) mehrere voneinander getrennte Vertiefungen (72) vorgesehen sind, deren jeweilige Bodenfläche (74) tiefer liegt als die Auflagefläche (70) für die Pipettiervorrichtung (12).

11. Pipettiervorrichtung nach Anspruch 10, wobei die Vertiefungen (72) derart ausgeführt sind, dass in ihnen weitere dem Betrieb der Pipettiervorrichtung dienende Komponenten aufnehmbar sind, wie etwa Stromanschlusseinheit, Rechnereinheit, Lüftungseinheit und dergleichen.

12. Pipettiervorrichtung nach einem der vorhergehenden Ansprüche, wobei in der oberen oder/und der unteren Rückwand (22, 32) des oberen bzw. unteren Gehäuseteils (14, 16) gitterartige oder schlitzartige Öffnungen (80) vorgesehen sind.

13. Pipettiervorrichtung nach einem der vorhergehenden Ansprüche, wobei der untere Gehäuseteil (16) und der obere Gehäuseteil (14) aus einem Kunststoff hergestellt sind, vorzugsweise aus Polyurethan oder Polyurethanschaum.

14. Pipettiervorrichtung nach einem der vorhergehenden Ansprüche, ferner umfassend
eine Aufnahmeplatte (84) zur Aufnahme von wenigstens einem Probenbehälter;
wenigstens eine Pipettiereinheit (94) mit einem Pipettierkanal (96) zum Aspirieren und Dispensieren von Probenflüssigkeit aus dem wenigstens einen Probenbehälter, wobei der Pipettierkanal (96) in drei zueinander orthogonalen Hauptrichtungen (X, Y, Z) beweglich ist mittels Antriebseinheiten für die Bewegung entlang der Hauptrichtungen (X, Y Z),
wobei eine mit der Aufnahmeplatte (94) verbundene Trägerkonstruktion (90, 92, 100), an der die Pipettiereinheit (94) gelagert ist und entlang der die Pipettiereinheit (94) in einer der Hauptrichtungen (X) beweglich ist, selbsttragend ausgebildet ist, so dass ein Betrieb der Pipettiervorrichtung (12) unabhängig davon möglich ist, ob die Pipettiervorrichtung in einem Gehäuse aufgenommen ist oder/und verbunden ist.

## Claims

1. Pipetting device with housing (10), in particular pipetting robot, comprising:
a lower housing part (16) with a housing bottom (28), a lower rear side (32), a lower front side (30) and lower side walls (34a, 34b) connecting the lower front side (30) and the lower rear side (32), wherein the lower housing part (16) is designed such that it can be positioned directly on a position surface, in particular a work surface of a table or the like;
an upper housing part (14) with a housing roof (18), an upper rear side (22), an upper front side (20) and upper side walls (24a, 24b) connecting the upper front side (20) and the upper rear side (22);
wherein the housing bottom (28) comprises at least one support surface (70) on which a pipetting device (12) accommodated in the housing is supported;
wherein the upper housing part (14) and the lower housing part (16) are designed such that the upper housing part (14) can be arranged on the lower housing part (16) independently of the pipetting device (12) received in the lower housing part (16) or can be removed therefrom.

2. Pipetting device according to claim 1, wherein the lower side walls (34a, 34b) have end faces (54) which face the upper housing part (14) and which comprise at least one partially inclined lower support section (55, 56, 57, 58).

3. Pipetting device according to claim 1 or 2, wherein the upper side walls (24a, 24b) have end faces (48) which face the lower housing part (16) and which comprise at least one partially inclined upper support section 50, 51, 52, 53).

4. Pipetting device according to claim 2 and 3, wherein at least two inclined support sections (50, 53, 55, 58) are provided on each end face (48, 54), which are inclined in such a way that they intersect in an imaginary extension along the respective lower or upper side wall (24a, 24b, 34a, 34b) at an obtuse angle.

5. Pipetting device according to one of the preceding claims, wherein projections (62, 66) and corresponding recesses (60, 64) are provided on the upper housing part (14) and on the lower housing part (16) so that they are in engagement with one another when the upper housing part (14) is arranged on the lower housing part (16).

6. Pipetting device according to one of the preceding claims, wherein a cutout (40a, 40b, 42a, 42b) is provided in each of the lower and upper side walls (24a, 24b, 34a, 34b), in which a side wall element (44a, 44b) can be received or is received that connects the upper and lower side walls (24a, 34a, 24b, 34b), the side wall element being in particular transparent, preferably a window element made of plastic or glass.

7. Pipetting device according to one of the preceding claims, wherein the lower housing part (16) on its front side (30) has at least one lower door element (36) which is movable, in particular pivotable, between an open position and a closed position, wherein preferably the lower door element (36) is at least partially made of a transparent material.

8. Pipetting device according to one of the preceding claims, wherein the upper housing part (14) on its front side (20) has at least one upper door element (26) which is movable, in particular pivotable, between an open position and a closed position, wherein preferably the upper door element (26) is at least partially made of a transparent material.

9. Pipetting device according to claim 7 and 8, wherein when the lower and upper door elements (26, 36) are closed, a closed working space (78) formed by the housing (10) is formed in which the pipetting device (12) is accommodated during operation.

10. Pipetting device according to one of the preceding claims, wherein a plurality of separate depressions (72) are provided in the housing base (28), the respective bottom surface (74) of which is lower than the support surface (70) for the pipetting device (12).

11. Pipetting device according to claim 10, wherein the depressions (72) are designed in such a way that further components serving to operate the pipetting device can be received in them, such as power connection unit, computer unit, ventilation unit and the like.

12. Pipetting device according to one of the preceding claims, wherein grid-like or slot-like openings (80) are provided in the upper and/or the lower rear wall (22, 32) of the upper or lower housing part (14, 16).

13. Pipetting device according to one of the preceding claims, wherein the lower housing part (16) and the upper housing part (14) are made from a plastic, preferably from polyurethane or polyurethane foam.

14. Pipetting device according to one of the preceding claims, further comprising
a receiving plate (84) for receiving at least one sample container;
at least one pipetting unit (94) with a pipetting channel (96) for aspirating and dispensing sample liquid from the at least one sample container, wherein the pipetting channel (96) is movable in three mutually orthogonal main directions (X, Y, Z) by means of drive units for movement along the main directions (X, Y, Z),
wherein a support structure (90, 92, 100) connected to the receiving plate (94), on which the pipetting unit (94) is mounted and along which the pipetting unit (94) is movable in one of the main directions (X), is designed to be self-supporting, so that operation of the pipetting device (12) is possible regardless of whether the pipetting device is accommodated or/and is connected in a housing.

## Revendications

1. Dispositif de pipetage avec un boîtier (10), en particulier robot de pipetage, comprenant :
une partie de boîtier inférieure (16) avec un fond de boîtier (28), un côté arrière inférieur (32), un côté avant inférieur (30) et des parois latérales inférieures (34a, 34b), lesquelles relient le côté avant inférieur (30) et le côté arrière inférieur (32) l'un à l'autre, dans lequel la partie de boîtier inférieure (16) est réalisée de telle manière qu'elle peut être placée directement sur une surface de placement, en particulier une surface de travail d'une table ou similaire ;
une partie de boîtier supérieure (14) avec un toit de boîtier (18), un côté arrière supérieur (22), un côté avant supérieur (20) et des parois latérales supérieures (24a, 24b), lesquelles relient le côté avant supérieur (20) et le côté arrière supérieur (22) l'un à l'autre ;
dans lequel le fond de boîtier (28) comprend au moins une surface d'appui (70), sur laquelle repose un dispositif de pipetage (12) logé dans le boîtier ;
dans lequel la partie de boîtier supérieure (14) et la partie de boîtier inférieure (16) sont réalisées de telle manière que la partie de boîtier supérieure (14) peut être disposée indépendamment du dispositif de pipetage (12) logé dans la partie de boîtier inférieure (16) sur la partie de boîtier inférieure (16) ou peut être retirée de celle-ci.

2. Dispositif de pipetage selon la revendication 1, dans lequel les parois latérales inférieures (34a, 34b) présentent des côtés frontaux (54), qui sont tournés vers la partie de boîtier supérieure (14) et qui comprennent au moins une section d'appui inférieure (55, 56, 57, 58) s'étendant en partie de manière inclinée.

3. Dispositif de pipetage selon la revendication 1 ou 2, dans lequel les parois latérales supérieures (24a, 24b) présentent des côtés frontaux (48), qui sont tournés vers la partie de boîtier inférieure (16) et qui comprennent au moins une section d'appui supérieure (50, 51, 52, 53) s'étendant en partie de manière inclinée.

4. Dispositif de pipetage selon la revendication 2 et 3, dans lequel sont prévues sur chaque côté frontal (48, 54) au moins deux sections de repos (50, 53, 55, 58) inclinées, qui sont inclinées de telle manière qu'elles s'entrecoupent en un angle obtus dans un prolongement imaginaire le long de la paroi latérale inférieure ou supérieure (24a, 24b, 34a, 34b) concernée.

5. Dispositif de pipetage selon l'une des revendications précédentes, dans lequel des parties faisant saillie (62, 66) et des évidements (60, 64) correspondants sont prévus sur la partie de boîtier supérieure (14) et sur la partie de boîtier inférieure (16) de telle sorte qu'ils sont en prise les uns avec les autres quand la partie de boîtier supérieure (14) est disposée sur la partie de boîtier inférieure (16).

6. Dispositif de pipetage selon l'une des revendications précédentes, dans lequel est prévue dans les parois latérales inférieures et les parois latérales supérieures (24a, 24b, 34a, 34b) respectivement une découpe (40a, 40b, 42a, 42b), dans laquelle peut être logé ou est logé un élément de paroi latéral (44a, 44b), de préférence un élément formant fenêtre en matière plastique ou en verre, en particulier transparent reliant la paroi latérale supérieure et la paroi latérale inférieure (24a, 34a, 24b, 34b).

7. Dispositif de pipetage selon l'une des revendications précédentes, dans lequel la partie de boîtier inférieure (16) présente sur son côté avant (30) au moins un élément formant porte inférieur (36), qui est mobile, en particulier peut être pivoté, entre une position ouverte et une position fermée, dans lequel de préférence l'élément formant porte inférieur (36) est fabriqué au moins en partie à partir d'un matériau transparent.

8. Dispositif de pipetage selon l'une des revendications précédentes, dans lequel la partie de boîtier supérieure (14) présente sur son côté avant (20) au moins un élément formant porte supérieur (26), qui est mobile, en particulier peut être pivoté, entre une position d'ouverture et une position de fermeture, dans lequel de préférence l'élément formant porte supérieur (26) est fabriqué au moins en partie à partir d'un matériau transparent.

9. Dispositif de pipetage selon la revendication 7 et 8, dans lequel, pour un élément formant porte inférieur et supérieur (26, 36) fermé, un espace de travail (78) fermé formé par le boîtier (10) est formé, dans lequel le dispositif de pipetage (12) est logé en fonctionnement.

10. Dispositif de pipetage selon l'une des revendications précédentes, dans lequel sont prévus, dans le fond de boîtier (28), plusieurs renfoncements (72) séparés les uns des autres, dont la surface de fond (74) respective est située plus en profondeur que la surface d'appui (70) pour le dispositif de pipetage (12) .

11. Dispositif de pipetage selon la revendication 10, dans lequel les renfoncements (72) sont réalisés de telle manière que d'autres composants servant au fonctionnement du dispositif de pipetage peuvent être logés dans ceux-ci, tels qu'une unité de branchement électrique, une unité de calcul, une unité d'aération et similaire.

12. Dispositif de pipetage selon l'une des revendications précédentes, dans lequel des ouvertures (80) de type grille ou entaille sont prévues dans la paroi arrière supérieure et/ou la paroi arrière inférieure (22, 32) de la partie de boîtier supérieure ou inférieure (14, 16).

13. Dispositif de pipetage selon l'une des revendications précédentes, dans lequel la partie de boîtier inférieure (16) et la partie de boîtier supérieure (14) sont fabriquées à partir d'une matière plastique, de préférence à partir de polyuréthane ou de mousse de polyuréthane.

14. Dispositif de pipetage selon l'une des revendications précédentes, comprenant en outre
une plaque de logement (84) pour loger au moins un contenant d'échantillons ;
au moins une unité de pipetage (94) avec un canal de pipetage (96) pour aspirer et distribuer un échantillon liquide provenant de l'au moins un contenant d'échantillons, dans lequel le canal de pipetage (96) est mobile dans trois directions principales (X, Y, Z) au moins orthogonales les unes par rapport aux autres au moyen d'unités d'entraînement pour le déplacement le long des directions principales (X, Y, Z),
dans lequel une structure porteuse (90, 92, 100) reliée à la plaque de logement (94), sur laquelle l'unité de pipetage (94) est montée et le long de laquelle l'unité de pipetage (94) est mobile dans l'une des directions principales (X), est réalisée de manière autoporteuse de sorte qu'un fonctionnement du dispositif de pipetage (12) est possible indépendamment du fait de savoir si le dispositif de pipetage est logé dans un boîtier et/ou est relié.
